**Europäisches Patentamt**

**European Patent Office**

**Office européen des brevets**

(11) Veröffentlichungsnummer: **0 493 771 A1**

## (12) EUROPÄISCHE PATENTANMELDUNG

(21) Anmeldenummer: **91122074.7**

(51) Int. Cl.5: **F16K 15/18**

(22) Anmeldetag: **21.12.91**

(30) Priorität: **25.12.90 YU 2455/90**
**21.11.91 YU 1830/91**

(43) Veröffentlichungstag der Anmeldung:
**08.07.92 Patentblatt 92/28**

(84) Benannte Vertragsstaaten:
**AT BE CH DE DK ES FR GB GR IT LI LU NL SE**

(71) Anmelder: **Pesovic, Predrag**
**Patrisa Lumumbe 24**
**Belgrad(YU)**
Anmelder: **Pesovic, Nemanja**
**Patrisa Lumumbe 24**
**Belgrad(YU)**
Anmelder: **Pesovic, Vojin**
**Patrisa Lumumbe 24**
**Belgrad(YU)**

(72) Erfinder: **Pesovic, Predrag**
**Patrisa Lumumbe 24**
**Belgrad(YU)**
Erfinder: **Pesovic, Nemanja**
**Patrisa Lumumbe 24**
**Belgrad(YU)**
Erfinder: **Pesovic, Vojin**
**Patrisa Lumumbe 24**
**Belgrad(YU)**

(74) Vertreter: **Boecker, Joachim, Dr.-Ing.**
**Rathenauplatz 2-8**
**W-6000 Frankfurt a.M. 1(DE)**

(54) **Einweg-Rückschlagventil.**

(57) Einweg-Rückschlagventil, bestehend aus einem Gehäuse (19), das vorzugsweise als Sechskantgehäuse ausgebildet ist, und einer Spindel (2), wobei auf das Gehäuse (19) eine Kappe (15) aufgesetzt ist, die an ihrer Stirnseite mit einer Dichtung (16) versehen ist. Gemäß der Erfindung ist die Spindel (2) mit einer blinden Bohrung (4) versehen, in die eine Spiralfeder (3) eingesetzt ist. Ein Kolben (1) ragt mit seiner Kolbenstange (23) in die genannte Blindbohrung (4) hinein. Die Spindel (2) mit dem Kolben (1) ist in die zentrale Bohrung (11) der Buchse (9) eingesetzt. Die Buchse (9) ist mit einem spiralförmigen Schlitz (10) versehen, in den ein Vorsprung (5) der Spindel (2) gleitend eingreift. Die Buchse (9) ist an ihrer Innenseite mit einem ringförmigen Sitz (29) versehen, gegen den der Kolben (1) mit seiner Stirnseite (24) dichtend anzuliegen vermag. Im Bereich des Sitzes (29) ist Buchse (9) mit durch die Wand hindurchgehenden Schlitzen (13) versehen. Durch das Ventil wird verhindert, daß bei offenstehendem Ventil und Druckausfall im Fluidsystem Fluid von außen über das Ventil in das Fluidsystem eindringen kann.

Fig.1

Die Erfindung betrifft ein Einweg-Rückschlagventil gemäß dem Oberbegriff des Anspruches 1.

Ein solches Einweg-Rückschlagventil wird beispielsweise auf dem Gebiet wassersanitärer Armaturen für Fluide aller Art, insbesondere Wasser, verwendet. Es dient zum Öffnen, Regulieren und Verschließen von Fluid-Quellen.

Es sind Ventile bekannt, die im Haushalt und in anderen Installationsanlagen verwendet werden und nach dem Prinzip einer Gewindespindel arbeiten, wobei die Bewegung des Kolbens oder der Spindel zwangsläufig der Windung folgt oder gedreht in der Spiralnut geführt wird. Beide Bauarten bieten keinen Schutz dagegen, daß Fluid in die Anlage eindringt, zum Beispiel, wenn der Druck in der Installationsanlage ausfällt.

Charakteristische Beispiele für solch einen Rückfluß des Fluids in die Installationsanlage sind industrielle Anlagen für Galvanisation, Oberflächenschutz und ähnliches, wo über Schläuche und konventionelle Ventile zum Beispiel Wannen zum Spülen und dergleichen verbunden sind. Die Ventile sind ständig geöffnet, und das Wasser fließt ununterbrochen durch die Wanne zum Spülen, wobei es im Falle eines Druckausfalles zu einem Eindringen des Wassers aus der Spülwanne in die wassersanitäre Installationsanlage mit unvorhersehbaren Folgen kommen kann. Insbesondere gilt dies auch für Haushalte, wo zum Beispiel eine unter Wasser befindliche Dusche auch zum Rückfluß des Wassers in die Installationsanlage führen kann, falls das Duschventil offen ist.

In der Praxis wurde das Problem bisher so gelöst, daß ein Rückschlagventil in die Installationsanlage eingebaut wurde, meistens ein für einen bestimmten Bereich bemessenes Rückschlagventil. Dieses Rückschlagventil befindet sich jedoch nicht in unmittelbarer Nähe des Verbraucherortes eines bestimmten Fluids; vielmehr ist nur ein einziges Rückschlagventil an zentraler Stelle der gesamten Installationsanlage angeordnet.

Der Erfindung liegt die Aufgabe zugrunde, ein Einweg-Rückschlagventil für beispielsweise wassersanitäre Armaturen zu entwickeln, welches beim Ausfall des Drucks in der Installationsanlage einen Rückfluß des Fluids in die Installationsanlage verhindert, selbst wenn das Ventil offen gelassen wurde.

Zur Lösung dieser Aufgabe wird ein Einweg-Rückschlagventil gemäß dem Oberbegriff des Anspruches 1 vorgeschlagen, welches erfindungsgemäß die im kennzeichnenden Teil des Anspruches 1 genannten Merkmale hat.

Vorteilhafte Ausgestaltungen der Erfindung sind in den weiteren Ansprüchen genannt.

Anhand der Figuren soll die Erfindung näher erläutert werden. Es zeigen

Figur 1    ein erstes Ausführungsbeispiel eines Einweg-Rückschlagventils gemäß der Erfindung im Längsschnitt und im geschlossenen Zustand,

Figur 2    ein zweites Ausführungsbeispiel eines Einweg-Rückschlagventils gemäß der Erfindung im Längsschnitt und im geschlossenen Zustand.

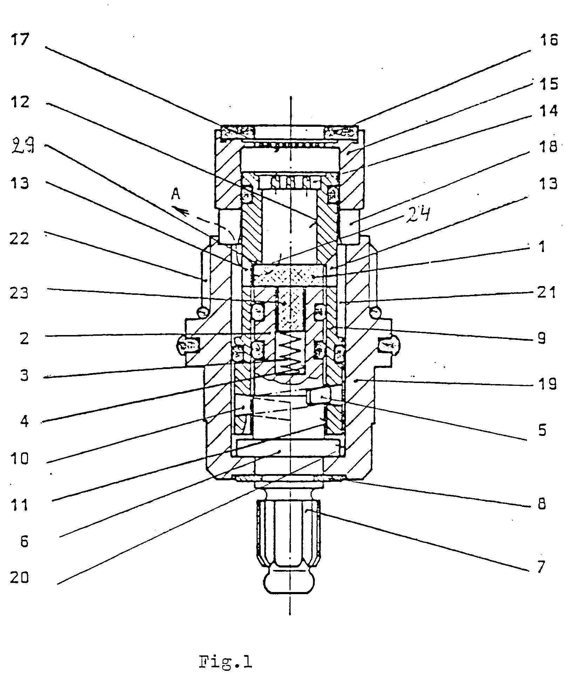

Das in Figur 1 gezeigte Rückschlagventil besteht aus dem Sechskantgehäuse oder Sechskantkopfstück 19, dessen Gewinde 22 den üblichen Gewindeöffnungen an Armaturen wassersanitärer Installationsanlagen angepaßt ist. In die Innenbohrung 20 des Sechskantgehäuses 19 ist eine Spindel 2 mit einem Kolben 1 eingesetzt, dessen Kolbenstange 23 in die blinde Bohrung 4 der Spindel 2 hineinragt, in der sie sich auf einer Spiralfeder 3 abstützt. Die Spindel 2 hat einen Vorsprung 5, der aus einem Stück mit der Spindel gefertigt sein kann. Die Spindel 2 hat ferner einen Flansch 6, mit dem sie sich am Boden des Sechskantgehäuses 19 abstützt. Durch einen Sicherungsring 8 ist die Spindel 2 gegen axiale Verschiebung gesichert. Am im Sinne der Zeichnung unteren Ende der Spindel 2 befindet sich ein mit Nuten versehener Zapfen 7, der zum Öffnen und Schließen des Ventils dient.

Ein sehr wichtiger Teil des Ventils ist die Buchse 9, die an ihrem oberen Teil ein Sieb 14 für den Durchfluß des Wassers beziehungsweise sonstigen Fluids trägt. Ungefähr in der Mitte ihrer Länge ist der zylindrische Teil mit dem kleineren Außendurchmesser mit zwei diametral gegenüberliegenden die Wand durchdringenden Schlitzen 13 versehen. Der zylindrische Teil mit dem größeren Außendurchmesser ist ungefähr im unteren Bereich der Buchse 9 mit einem spiralförmigen Schlitz 10 versehen, in welchen der Vorsprung 5 der Spindel 2 gleitend eingreift. Bei Drehung der Spindel 2 verschiebt der Vorsprung 5 die Buchse 9 in axialer Richtung nach oben beziehungsweise nach unten. Der ringförmige Raum, der sich zwischen der Außenwand des mit dem kleineren Außendurchmesser versehenen Teils der Buchse 9 und der Innenwand 20 des Sechskantgehäuses 19 bildet, dient als Ringöffnung 21, über die das Fluid im geöffneten Zustand des Ventils in das Gehäuse der Armatur und zum Ausfluß strömt. Die Buchse 9 erstreckt sich mit ihrem die größere Innenbohrung 11 aufweisenden Teil über die aus Spindel 2, Kolben 1 und Feder 3 bestehende Anordnung, wobei der Kolben 1 im geschlossenen Zustand des Ventils mit seiner Stirnfläche 24 gegen die als Sitz ausgebildete Stirnfläche 29 anliegt, die sich am Übergang der Bohrung der Buchse 9 vom größeren Innendurchmesser 20 zum kleineren Innendurchmesser 11 bildet.

Auf die Stirnfläche des Sechskantgehäuses ist eine Kappe 15 aufgesetzt, die sich auch über einen Teil der Buchse 9 erstreckt. Dieser Teil der Buchse liegt mittels eines dichtenden O-Ringes 31 gegen die Innenwand der Kappe an. An ihrer Stirnseite trägt die Kappe 15 eine Dichtung 16 in Form eines Ringes sowie ein Sieb 17. Im zylindrische Mantel der Kappe 15 sind um 90 Grad versetzte sich in radialer Richtung kreuzende nutförmige Öffnungen 18 vorgesehen, durch welche das Fluid bei geöffnetem Ventil fließt.

Das Ventil gemäß der Erfindung arbeitet wie folgt: Das in Figur 1 gezeigte Ventil wird zum Beispiel in das Gehäuse einer Duschbatterie in einem Bad eingebaut, und zum Drehen der Spindel 3 wird ein Handgriff auf den Zapfen 7 aufgesetzt. In Figur 1 ist das Ventil in geschlossener Stellung dargestellt, und das Fluid kann durch die zentrale Öffnung der Dichtung 16, das Sieb der Kappe 15, und das Sieb der Buchse 9 bis zur Stirnseite des Kolbens 1 vordringen und die Innenbohrung 12 der Buchse 9 ausfüllen. Beim Drehen des Handgriffes beziehungsweise des Zapfens 7 dreht sich der Vorsprung 5 der Spindel im Schlitz 10 der Buchse. Dabei wird die Buchse 9 nach oben verschoben, wobei sich die Buchse 9 in Abhängigkeit von der Größe der Steigung des Schlitzes 10 in ihre obere Endstellung verschiebt. Wenn jedoch die Installationsanlage ohne Druck ist, entspannt sich die Feder 3 und schiebt den Kolben im Sinne der Zeichnung nach oben, wobei er nicht von der Stirnfläche 29, gegen die er anliegt, abhebt. Vielmehr hebt der Kolben von der Stirnfläche der Spindel 2 ab, wobei er weiterhin gegen die Stirnfläche 29 anliegt. Wenn in der Installation ein bestimmter Druck herrscht, so wirkt dieser auf die Fläche des Kolbens und schiebt diesen nach unten, wobei die Feder 3 komprimiert wird. Das Fluid fließt dann über die Schlitze 13, füllt die Ringöffnung 21 und läuft nach vier Seiten durch die Öffnungen 18 heraus, wie dies durch den Pfeil A angedeutet ist.

Im Falle eines Druckausfalls in der Installation führt die Feder 3 den Kolben 1 nach oben, wobei er mit seiner Stirnseite 24 gegen die Stirnfläche 29 gedrückt wird, wodurch der Durchbruch von Fluid in die Installationsanlage, falls das Ventil offen gelassen wurde, verhindert wird.

Das Sieb 17 an der Stirnseite der Kappe 15 hat die Aufgabe, das Eindringen von kleinen Steinen, Sand oder anderen Verunreinigungen zwischen die gleitenden Teile des Ventils zu verhindern. Trotz dieser Maßnahme passiert es im Laufe der Benutzung, daß mechanische Verunreinigungen in den Spalt zwischen der inneren Bohrung der Kappe 15 und der Außenseite des mit dem kleineren Außendurchmesser versehenen Teils der Buchse 9 eindringen, wodurch eine verstärkte Reibung zwischen den aufeinander gleitenden Flächen stattfindet und es sogar zu einem Einfressen des genannten Teiles der Buchse in die inneren Zylinderwand der Kappe kommen kann.

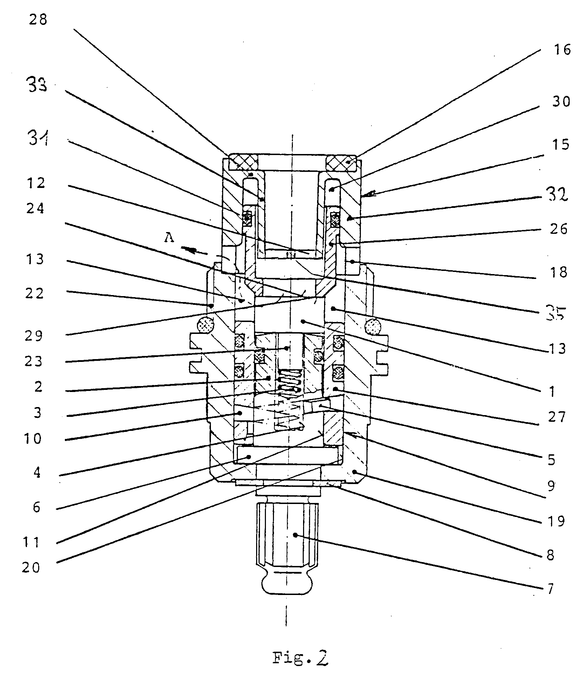

Figur 2 zeigt ein Ausführungsbeispiel der Erfindung, bei dem das Eindringen von Fluid mit eventuellen Verunreinigungen in den Spalt zwischen der Innenbohrung des zylindrischen Teils der Kappe 15 und dem oberen Abschnitt des mit dem kleineren Außendurchmesser versehenen Teils der beweglichen Buchse 9 verhindert wird.

Bei dieser Ausführungsform ist die die Kolbenstange 23 aufnehmende Seite der Spindel 2 mit einer konvexen Stirnseite ausgebildet. Zwischen der Kolbenstange 23 und der Bohrung 4 ist ein relativ großer Spalt belassen, damit sich der Kolben 1 beim Schließen des Ventils (eventuell leicht kippend) voll an die konvexe Stirnfläche der Spindel anlegen kann. Wie Figur 2 zeigt, besteht die Buchse 9 wieder aus einem Zylinderteil 27 mit größerem Durchmesser und einem Zylinderteil 26 mit kleinerem Durchmesser. An dem Übergang zwischen diesen beiden Teilen sind wieder die beiden diametral gegenüberliegenden Schlitze 13 vorhanden. Nahe dem oberen Ende des dünneren Zylinderteils 26 der Buchse 9 ist ein O-Ring 31 in einer entsprechenden Nut angeordnet.

Am offenen Ende des Sechskantgehäuses 19 mit dem Gewinde 22 ist die Kappe 15 mit ihrem zylindrischen Außenmantel 32 aufgesetzt. An dem im Sinne der Figur oberen Ende der Kappe befindet sich wieder die ringförmige Dichtung 16.

Bei dieser Ausführungsform ist die Kappe mit einem zusätzlichen zylindrischen Innenmantel 33 versehen, der ebenfalls vom Flansch 28 der Kappe ausgeht. Am freien Ende des Außenmantels 32 der Kappe sind wieder vier gleichmäßig über den Umfang verteilten nutförmigen Öffnungen 18 für den Durchfluß des Fluids vorhanden. Der zylindrische Innenmantel 33 der Kappe 15 wird in der Innenbohrung 12 des im Durchmesser kleineren Zylinderteils 26 der Buchse 9 geführt, wobei er weit in die Bohrung 12 hineinragt. Am unteren Ende des zylindrischen Innenmantels 33 der Kappe 15 sind aus einem Stück zwei sich im rechten Winkel kreuzende Rippen 35 angegossen. Diese Kreuzrippen 35 dienen als Sieb zum Zurückhalten von Verunreinigungen, die sich eventuell in dem durch das Ventil fließenden Fluid befinden.

Die Arbeitsweise der Ausführungsform gemäß Figur 2 ist wie folgt: Das Ventil wird in das Gehäuse, zum Beispiel einer Duschbatterie, eingeschraubt und festgezogen. Die ringförmige Dichtung 16 sitzt dann auf dem Ventilsitz im Gehäuse, zum Beispiel der Duschbatterie, die nicht dargestellt ist. Auf den Zapfen 7 der Spindel wird ein Handgriff aufgesetzt, der ebenfalls nicht dargestellt ist. Mit dem Drehen der Spindel 2 mittels des nicht dargestellten Handgriffs entgegen dem Uhrzeigersinn dreht sich der Vorsprung 5 der Spindel in dem Schlitz 10 der Buchse 9, wodurch diese im Sinne der Zeichnung nach oben verschoben wird. In dem Falle, daß in der Leitung für das Wasser oder ein anderes Fluid kein Druck herrscht, würde die Feder 3 die Kolbenstange 23 nach oben drücken, und der Kolben würde mit seiner Stirnfläche 24 ständig an dem ringförmigen Sitz 29 der Buchse 9 anliegen. Damit wird zugleich der Durchbruch von zurückgebliebenen Fluid in die Leitung verhindert, so daß dieses nicht in die Installationsanlage zurückfließen kann.

Falls das Fluid in der Leitung unter Druck steht, wirkt dieser Druck beim Hochschieben der Buchse 9 auf die Stirnfläche des Kolbens 1 und überwindet die Kraft der Feder 3. Das Fluid fließt dann durch die Schlitze 13 der Buchse 9 wie auch durch die vier um 90 Grad versetzt angeordneten Öffnungen 18 der Kappe in die Installation, wie dies der Pfeil A andeutet. Mit dem Drehen des Handgriffes beziehungsweise der Spindel 2 im Uhrzeigersinn wird die Buchse 9 im Sinne der Zeichnung nach unten bewegt, und der Kolben 1 legt sich mit seiner Stirnfläche 24 gegen den Sitz 29 an und unterbricht den Durchfluß des Fluids. Der Innenmantel 33 der Kappe 15 hat die Aufgabe, den Zylinderringraum 30, der sich zwischen dem Außenmantel 31 und dem Innenmantel 33 der Kappe bildet, vom Druck des Fluids zu entlasten. Dadurch wird weitgehend die Gefahr beseitigt, daß sich die Buchse 9 mit ihrem dünneren zylindrischen Teil 26 während der axialen oder drehenden Bewegung einfrißt, wenn der Vorsprung 5 bis an das Ende des Schlitzes 10 gelangt.

**Patentansprüche**

1. Einweg-Rückschlagventil, bestehend aus einem Gehäuse (19), das vorzugsweise als Sechskantgehäuse ausgebildet ist, und einer Spindel (2), wobei auf das Gehäuse (19) eine Kappe (15) aufgesetzt ist, die an ihrer Stirnseite mit einer Dichtung (16) versehen ist, **dadurch gekennzeichnet**, daß die Spindel (2) mit einer blinden Bohrung (4) versehen ist, in die eine Spiralfeder (3) eingesetzt ist, daß ein Kolben (1) mit seiner Kolbenstange (23) in die genannte Blindbohrung (4) gleitend hineinragt, daß die Spindel (2) mit dem Kolben (1) in die zentrale Bohrung (11) der Buchse (9) eingesetzt ist, daß die Buchse (9), vorzugsweise nahe ihrem unteren Ende, mit einem spiralförmigen Schlitz (10) versehen ist, in den ein Vorsprung (5) der Spindel (2) gleitend eingreift, daß die Buchse (9) an ihrer Innenseite mit einem ringförmigen Sitz (29) versehen ist, gegen den der Kolben (1) mit seiner Stirnseite (24) dichtend anzuliegen vermag, und daß die Buchse (9) im Bereich des Sitzes (29) mit durch die Wand der Buchse hindurchgehenden Schlitzen (13) versehen ist.

2. Einweg-Rückschlagventil nach Anspruch 1, **dadurch gekennzeichnet**, daß der Sitz (29), gegen welchen der Kolben (1) mit seiner Stirnfläche (24) anliegt, durch einen in der Bohrung der Buchse (9) vorgesehenen ringförmigen Flansch gebildet wird.

3. Einweg-Rückschlagventil nach Anspruch 2, **dadurch gekennzeichnet**, daß die Buchse (9) aus zwei Abschnitten mit unterschiedlichem Innendurchmesser (11, 12) besteht, wobei der Sitz (29) an dem Übergang vom größeren Innendurchmesser (20) zum kleineren Innendurchmesser (12) gebildet wird.

4. Einweg-Rückschlagventil nach einem der vorhergehenden Ansprüche, **dadurch gekennzeichnet**, daß die Anzahl der durch die Wand der Buchse hindurchgehenden Schlitze (13) zwei beträgt, wobei diese beiden Schlitze sich diametral gegenüberliegen.

5. Einweg-Rückschlagventil nach einem der vorhergehenden Ansprüche, **dadurch gekennzeichnet**, daß die auf das Gehäuse (19) aufgesetzte Kappe (15) mit durch die Wand der Kappe hindurchtretenden Öffnungen (18) versehen ist.

6. Einweg-Rückschlagventil nach Anspruch 5, **dadurch gekennzeichnet**, daß die Anzahl der Öffnungen (18) vier beträgt, und die Öffnungen in Umfangsrichtung um 90° gegeneinander versetzt sind.

7. Einweg-Rückschlagventil nach einem der vorhergehenden Ansprüche, **dadurch gekennzeichnet**, daß die Kappe (15) mit einem Außenmantel (32) und einem Innenmantel (33) versehen ist, zwischen denen ein Ringraum (30) gebildet wird, in welchem die Buchse mit ihrem der Bedienungsseite des Ventils abgewandten zylindrischen Ende hineinragt.

8. Einweg-Rückschlagventil nach Anspruch 7, **dadurch gekennzeichnet**, daß der Innenmantel (33) an seinem freien Ende mit vorzugsweise angegossenen und vorzugsweise im rechten Winkel zueinander gerichteten sich diametral über die Öffnung erstreckenden Rippen (25) versehen ist.

9. Einweg-Rückschlagventil nach einem der vorhergehenden Ansprüche, **dadurch gekennzeichnet**, daß die Kappe und/oder das der Bedienungsseite abgewandte Ende der Buchse mit einem Sieb (17, 14) versehen ist.

10. Einweg-Rückschlagventil nach einem der vorhergehenden Ansprüche, **dadurch gekennzeichnet**, daß der in der Kappe (15) gleitende Teil der Buchse (9) mit einem Dichtungsring (31) versehen ist, der gegen die Innenwand der Kappe beziehungsweise die Innenseite des Außenmantels (32) der Kappe anliegt.

Fig.1

Fig. 2

Europäisches
Patentamt

# EUROPÄISCHER RECHERCHENBERICHT

Nummer der Anmeldung

EP 91 12 2074

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 644 972 (PERROT) <br> * Spalte 1, Zeile 1 - Spalte 3, Zeile 41; Abbildungen 3,4 * <br> --- | 1-3 | F16K15/18 |
| A | DE-A-2 537 206 (SCHOLZEN) <br> * das ganze Dokument * <br> --- | 1 | |
| A | DE-A-1 550 531 (SCHUBERT & SALZER MASCHINENFABRIK) <br> * das ganze Dokument * <br><br> ----- | 1 | |
| | | | **RECHERCHIERTE SACHGEBIETE (Int. Cl.5)** <br><br> F16K |

Der vorliegende Recherchenbericht wurde für alle Patentansprüche erstellt

| Recherchenort | Abschlußdatum der Recherche | Prüfer |
|---|---|---|
| DEN HAAG | 03 APRIL 1992 | CHRISTENSEN C. |